# EUROPEAN PATENT APPLICATION

(11) **EP 2 224 531 A1**
(43) Date of publication of application: **01.09.2010**
(21) Application number: 10250192.1
(22) Date of filing: 04.02.2010
(51) Int. Cl.: H01M 8/04

(54) **Fuel cell system and driving method thereof**

(30) Priority: 06.02.2009 US 150690 P; 04.12.2009 US 631688
(71) Applicant: Samsung SDI Co., Ltd., Gyeonggi-do (KR)
(72) Inventor: Na, Young-Seung, Yongsin-si Gyeonggi-do (KR); Song, In-Seob, Suwon-si Gyeonggi-do (KR); Kim, Ji-Rae, Suwon-si Gyeonggi-do (KR); Cho, Hye-Jung, Anyang-si Gyeonggi-do (KR); Choi, Kyoung-Hwan, Suwon-si Gyeonggi-do (KR)
(74) Representative: Mounteney, Simon James

(57) **Abstract**

A fuel cell system comprising: a fuel cell stack provided with a fuel inlet, a fuel outlet, an oxidant inlet and an oxidant outlet; a fuel supply unit adapted to supply fuel to the fuel cell stack; an oxidant supply unit adapted to supply oxidant to the fuel cell stack; a fuel inflow pipe for supplying fuel from the fuel supply unit to the fuel inlet during a first operating condition; a fuel outflow pipe for discharging non-reacted fuel from the fuel outlet during the first operating condition; a first bypass pipe for supplying fuel from the fuel supply unit to the fuel outlet during a second operating condition; and a second bypass pipe for discharging non-reacted fuel from the fuel inlet during the second operating condition.

## Description

### BACKGROUND OF THE INVENTION

### (a) Field of the Invention

The present invention relates to a fuel cell system and a driving method thereof, and more particularly, to a fuel cell system that improves a structure of supplying fuel to a fuel cell stack.

### (b) Description of the Related Art

Fuel cells are devices that electrochemically generate power by using fuel (hydrogen or reformed gas) and oxidant (oxygen or air) and directly convert the fuel (hydrogen or reformed gas) and oxidant (oxygen or air) continuously supplied from the outside into electrical energy by an electrochemical reaction.

Pure oxygen or air containing a large amount of oxygen is used as the oxidant of the fuel cell and pure hydrogen or fuel containing a large amount of hydrogen, which is generated by reforming hydrocarbon-based fuel (LNG, LPG, CH₃OH etc.) is used as the fuel.

Hereinafter, a direct methanol fuel cell (DMFC) will be primarily described for better comprehension and ease of description. The direct methanol fuel cell supplies high-concentration methanol to a fuel cell stack to generate electricity by reaction with the oxygen.

When the fuel cell system is operated for a long time, impurities are stacked in a fuel passage of the fuel cell stack, such that the passage is blocked.

As such, when the passage is blocked, a relevant cell must be replaced or repaired by disassembling the entire stack.

Further, the inside of the stack is deteriorated when the fuel cell system is operated. This deterioration causes the lifespan of the fuel cell stack to be shortened.

The above information disclosed in this Background section is only for enhancement of understanding of the background of the invention and therefore it may contain information that does not form the prior art that is already known in this country to a person of ordinary skill in the art.

### SUMMARY OF THE INVENTION

The present invention has been made in an effort to provide a fuel cell system that does not suffer from the above described problems of the prior art.

Accordingly, a first aspect of the invention provides a fuel cell system as set out in Claim 1.

Preferred features of this aspect of the invention are set out in Claims 2 to 11. A further aspect of the invention provides a driving method for a fuel system as set out in Claim 12. Preferred features of this aspect of the invention are set out in Claims 13 to 15.

Embodiments of the invention therefore make it possible to remove impurities in the fuel cell stack and improve the lifespan of the fuel cell system by preventing deterioration of the stack through reducing blockages.

### BRIEF DESCRIPTION OF THE DRAWINGS

Embodiments of the invention will be described by way of example, with refernence to the accompanying drawings, in which:
FIG. 1 is a schematic diagram of a fuel cell system according to a first embodiment of the present invention;
FIG. 2 is an exploded perspective view illustrating a structure of the fuel cell stack shown in FIG. 1;
FIG. 3 is a flowchart of a driving method of a fuel cell system according to an embodiment of the present invention;
FIG. 4A is a photograph illustrating a voltage of a defective fuel cell stack; and
FIG. 4B is a photograph illustrating a voltage of a normal fuel cell stack.

### DETAILED DESCRIPTION OF THE EMBODIMENTS

The present invention will be described more fully hereinafter with reference to the accompanying drawings, in which embodiments of the invention are shown. As those skilled in the art would realize, the described embodiments may be modified in various different ways, all without departing from the scope of the present invention.

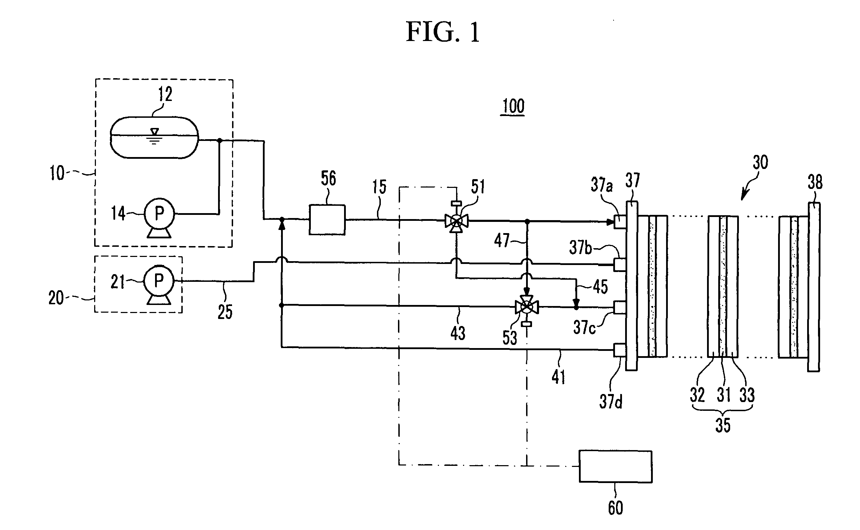

FIG. 1 is a schematic diagram illustrating an entire configuration of a fuel cell system according to a first embodiment of the present invention.

The fuel cell system 100 of this particular embodiment adopts a direct methanol fuel cell (DMFC) scheme that generates electrical energy by direct reaction of methanol and oxygen. However, the present invention is not limited thereto and a fuel cell system according to the invention may be configured by a direct oxidation fuel cell (DOFC) scheme that reacts liquid or gas fuel containing hydrogen, such as ethanol, LPG, LNG, gasoline, butane gas, etc. with oxygen. Further, the fuel cell system may be configured by a polymer electrode fuel cell (PEMFC) that uses the fuel by reforming the fuel into reformed gas containing sufficient hydrogen. The fuel used in the fuel cell system 100 generally represents hydrocarbon-based fuel in a liquid or gas state, such as methanol, ethanol, natural gas, LPG, etc. In addition, the fuel cell system may use oxygen gas stored in an additional storing means or air as oxidant that reacts with hydrogen.

The fuel cell system 100 according to the this embodiment of the invention includes a fuel cell stack 30 that generates power by using fuel and an oxidant, a fuel supply unit 10 that supplies the fuel to the fuel cell stack 30, and an oxidant supply unit 20 that supplies the oxidant for generating electricity to the fuel cell stack 30.

The fuel supply unit 10 is connected with the fuel cell stack 30 and includes a fuel tank 12 that stores liquefied fuel and a fuel pump 14 that is connected to the fuel tank 12. The fuel pump 14 serves to discharge the liquefied fuel stored in the fuel tank 12 from the inside of the fuel tank 12 by a predetermined pumping force. In this particular embodiment, the fuel stored in the fuel supply unit 10 consists of high-concentration methanol.

The oxidant supply unit 20 is connected with the fuel cell stack 30 and includes an oxidant pump 21 that suctions external air and supplies the external air to the fuel cell stack 30 by the predetermined pumping force.

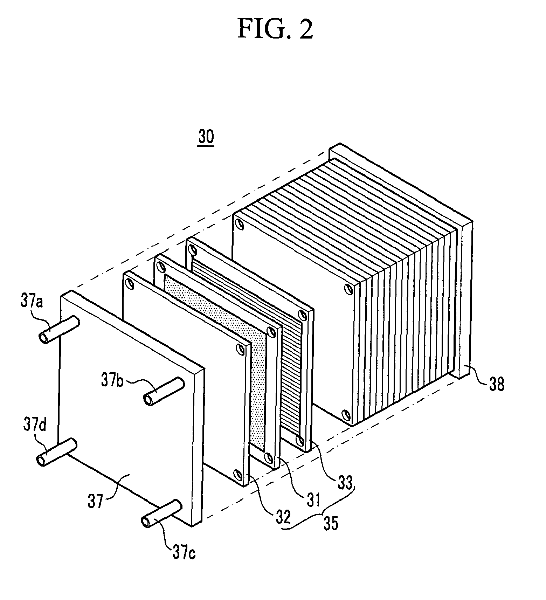

FIG. 2 is an exploded perspective view illustrating a structure of the fuel cell stack shown in FIG. 1.

Referring to FIGS. 1 and 2, the fuel cell stack 30 adopted in the fuel cell system 100 includes a plurality of electricity generating units 35 that generate electrical energy by inducing oxidation and reduction reactions of the fuel and the oxidant. Each of the electricity generating units 35 represents a unit cell that generates the electricity and includes a membrane electrode assembly (MEA) 31 that oxidizes and reduces oxygen in the fuel and the oxidant and separators (also referred to as a bipolar plate in the art) 32 and 33 that supply the fuel and the oxidant to the membrane electrode assembly 31.

Each electricity generating unit 35 has a structure in which the separators 32 and 33 is disposed on either side of the membrane electrode assembly 31. The membrane electrode assembly 31 includes an electrolyte membrane disposed at the center thereof, a cathode electrode disposed at one side of the electrolyte membrane, and an anode electrode disposed at the other side of the electrolyte membrane.

The separators 32 and 33 closely contact each other with the membrane electrode assembly 31 interposed therebetween. The separators 32 and 33 each have a fuel passage and an oxidant passage at both sides of the membrane electrode assembly 31. At this time, the fuel passage is disposed at the anode electrode of the membrane electrode assembly 31 and the oxidant passage is disposed at the cathode electrode of the membrane electrode assembly 31. In addition, the electrolyte membrane enables ion exchange in which hydrogen ions generated from the anode electrode move to the cathode electrode and are bound to oxygen of the cathode electrode to generate water.

In the fuel cell system 100, the plurality of electricity generating units 35 are successively arranged to constitute the fuel cell stack 30. Herein, end plates 37 and 38 for integrally fixing the fuel cell stack 30 are installed at outermost parts of the fuel cell stack 30.

A fuel inlet 37a for injecting the fuel to the fuel cell stack 30 and an oxidant inlet 37b for injecting the oxidant to the stack are formed in one end plate 37. A fuel outlet 37c for discharging non-reacted fuel remaining after reaction at the anode electrode and an oxidant outlet 37d for discharging moisture and non-reacted air generated by a bonding reaction of hydrogen and oxygen at the cathode electrode are also formed in this end plate 37.

The other end plate 38 pressurizes the electricity generating units 35 with facing the one end plate 37. In this embodiment, although the inlets 37a and 37b and the outlets 37c and 37d are formed only in the one end plate 37, the present invention is not limited thereto. The inlets 37a and 37b may be formed in the one end plate 37 and the outlets 37c and 37d may be formed in the other end plate 38.

The fuel supply unit 10 is connected with the fuel inlet 37a through a fuel inflow pipe 15 and the oxidant supply unit 20 is connected with the oxidant inlet 37b through an oxidant supply pipe 25. Further, a fuel outflow pipe 43 is connected to the fuel outlet 37c and an oxidant outflow pipe 41 is connected to the oxidant outlet 37d.

The fuel outflow pipe 43 and the oxidant outflow pipe 41 are connected with a fuel inflow pipe 15 in order to recover non-reacted fuel and moisture. A filter 56 is installed in the fuel inflow pipe 15 in order to remove impurities included in the fuel which is supplied to the fuel cell stack.

Meanwhile, a first bypass pipe 45 that transfers the fuel transferred from the fuel supply unit 10 to the fuel outflow pipe 43 is installed between the fuel inflow pipe 15 and the fuel outflow pipe 43. Further, a second bypass pipe 47 that transfers the fuel transferred from the non-reacted fuel discharged from the fuel inlet 37a to the fuel outflow pipe 43 is installed between the fuel inflow pipe 15 and the fuel outflow pipe 43.

In the fuel inflow pipe 15, the first bypass pipe 45 is installed closer to the fuel supply unit 10 than the second bypass pipe 47 and the second bypass pipe 47 is installed closer to the fuel cell stack 30 than the first bypass pipe 45. In the fuel outflow pipe 43, the first bypass pipe 45 is installed closer to the fuel cell stack 30 than the second bypass pipe 47.

As a result, the first bypass pipe 45 and the second bypass pipe 47 are not in communication with each other, but cross each other.

The first bypass pipe 45 is connected to the fuel inflow pipe 15 through a supply valve 51 and the second bypass pipe 47 is connected to the fuel outflow pipe 43 through a discharge valve 53. The supply valve 51 and the discharge valve 53 are each in the form of a 3-way valve.

The fuel cell system 100 according to this embodiment further includes a control unit 60. When the fuel cell system 100 is defective in operation, the control unit 60 controls the supply valve 51 to allow the fuel supply unit 10 and the first bypass pipe 45 to be in communication with each other to inject the fuel into the fuel outlet 37c.

At this time, the supply valve 51 intercepts connection between the fuel inflow pipe 15 and the fuel cell stack 30 to allow the fuel that is injected from the fuel supply unit 10 to flow through the first bypass pipe 45.

Further, the control unit 60 controls the discharge valve 53 to allow the second bypass pipe 47 and the fuel outflow pipe 43 to be in communication with each other to discharge the non-reacted fuel discharged from the fuel inlet 37a to the fuel outflow pipe 43. At this time, the discharge valve 53 intercepts connection between the fuel outflow pipe 43 and the fuel cell stack 30, such that the non-reacted fuel is not injected into the fuel cell stack 30, but may be discharged.

As such, an operation in which the fuel is injected into the fuel outlet 37c and the fuel is discharged to the fuel inlet 37a is referred to as a reverse operation. Meanwhile, an operation in which the fuel is injected into the fuel inlet 37a and the fuel is discharged from the fuel outlet 37c is referred to as a forward operation. The forward operation is a first operating condition and the reverse operation is a second operating condition.

The non-reacted fuel passes through the fuel outflow pipe 43 then is supplied to the fuel inflow pipe 15 wherein the non-reacted fuel passes through the filter 56. At this time, the impurities included in the non-reacted fuel may be filtered by the filter 56. Hence, the impurities may be easily removed by changing the filter 56 periodically.

As such, after the reverse operation is performed for a predetermined time, the control unit 60 intercepts the connection between the fuel inflow pipe 15 and the first bypass pipe 45 and intercepts the connection between the fuel outflow pipe 43 and the second bypass pipe 47. In addition, the fuel inflow pipe 15 and the fuel inlet 37a are in communication with each other and the fuel outflow pipe 43 and the fuel outlet 37c are in communication with each other.

As a result, the fuel is again supplied to the fuel inlet 37a through the fuel inflow pipe 15 and the fuel outlet 37c and the fuel outflow pipe 43 are in communication with each other to discharge the non-reacted fuel.

When the first bypass pipe 45 and the second bypass pipe 47 are connected with the supply valve 51 and the discharge valve 53, low-concentration fuel is in contact with a part where high-concentration fuel flows and the high-concentration fuel is in contact with a part where the low-concentration fuel flows. As a result, the fuel cell stack 30 is reactivated, such that the durability and lifespan of the fuel cell stack are improved.

Further, the impurities accumulated in the fuel cell stack 30 may be discharged to the outside by reversely injecting the fuel.

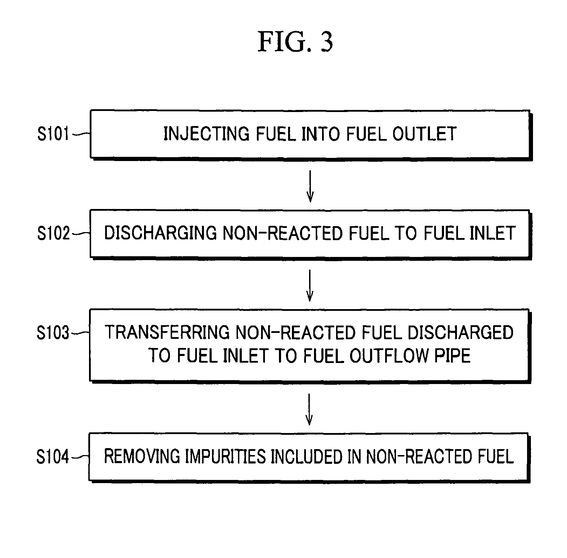

FIG. 3 is a flowchart of a driving method of a fuel cell system according to of the present invention.

Referring to FIG. 3, the driving method includes the steps of injecting fuel into a fuel outlet 37c (S101), discharging non-reacted fuel to a fuel inlet 37a (S102), transferring the non-reacted fuel discharged to the fuel inlet 37a to a fuel outlet pipe 43 (S103), and removing impurities included in the non-reacted fuel (S104).

The step of injecting the fuel into the fuel outlet 37c (S101) includes the steps of connecting a bypass pipe 45 with a fuel inflow pipe 15 and intercepting connection between the fuel inflow pipe 15 and the fuel inlet 37a.

The fuel inflow pipe 15 and the first bypass pipe 45 are connected with each other by a supply valve 51 and the fuel inflow pipe 15 and the fuel inlet 37a are also intercepted from each other by the supply valve 51.

That is, the supply valve 51 closes a pipe connected from the fuel inflow pipe 15 to the fuel inlet 37a and opens a part connected with the first bypass pipe 45.

By the above-mentioned control, the fuel is injected into the first bypass pipe 45 through the fuel inflow pipe 15 and the fuel injected into the first bypass pipe 45 may be injected into the fuel outlet 37c through the fuel outflow pipe 43 connected with the first bypass pipe 45.

Therefore, the step of injecting the fuel into the fuel outlet 37c (S101) further includes the steps of transferring the fuel to the first bypass pipe 45 from the fuel inflow pipe 15, transferring the fuel to the fuel outflow pipe 43 from the first bypass pipe 45, and injecting the fuel to the fuel outlet 37c from the fuel outflow pipe 43.

As described above, the fuel transferred to the fuel inflow pipe 15 from a fuel supply unit 10 is injected into the fuel outlet 37c by passing through the first bypass pipe 45 and the fuel outflow pipe 43 in sequence.

The fuel injected into the fuel outlet 37c reacts with oxidant in a fuel cell stack 30 and the non-reacted fuel is discharged to the fuel inlet 37a.

The step of transferring the non-reacted fuel discharged to the fuel inlet 37a to the fuel outflow pipe 43 (S103) includes the steps of connecting a second bypass pipe 47 with the fuel outflow pipe 43 and intercepting connection between the fuel outflow pipe 43 and the fuel outlet 37c.

The fuel outflow pipe 43 and the second bypass pipe 47 are connected with each other by a discharge valve 53 and the fuel outflow pipe 43 and the fuel outlet 37c are also intercepted from each other by the discharge valve 53.

That is, the discharge valve 53 closes a pipe connected from the fuel outflow pipe 43 to the fuel outlet 37c and opens a part connected with the second bypass pipe 47.

By the above-mentioned control, the fuel discharged from the fuel inlet 37a is injected into the second bypass pipe 47 through the fuel inflow pipe 15 and the fuel injected into the second bypass pipe 47 may be discharged through the fuel outflow pipe 43 connected with the second bypass pipe 47.

Therefore, the step of transferring the non-reacted fuel discharged to the fuel inlet 37a to the fuel outflow pipe 43 (S103) further includes the steps of transferring the fuel to the second bypass pipe 47 from the fuel inflow pipe 15 and transferring the fuel to the fuel outflow pipe 43 from the second bypass pipe 47.

As described above, the fuel transferred to the fuel inflow pipe 15 from the fuel inlet 37a is discharged by passing through the second bypass pipe 47 and the fuel outflow pipe 43 in sequence.

As such, when the fuel is injected into the fuel outlet 37c and the fuel is discharged to the fuel inlet 37a, the reverse operation is performed, thereby removing impurities. The impurities included in the fuel are filtered by the filter 56, and the impurities created in the fuel cell stack 30 are basically expelled out by the flow pressure. On the contrary, when the impurities created in the fuel cell stack 30 block the inlet of passage under certain conditions, the fuel may not flow into the electricity generating unit 35. In such a situation, if the inlet and outlet are exchanged and the fuel is to be flowed inversely, the impurities located at the inlet of passage may be expelled to the fuel outflow pipe 43. That impurities are transferred to the fuel inlet pipe 15 and then filtered at the filter 56, afterwards never be able to flow into the fuel cell stack 30. Therefore, the fuel cell stack 30 may be used semipermanently if the filter 56 is changed periodically.

When the fuel flows in a reverse direction, low-concentration fuel is in contact with a part where high-concentration flows and the high-concentration fuel is in contact with a part where the low-concentration fuel flows. As a result, the fuel cell stack 30 is reactivated, such that the durability and lifespan of the fuel cell stack 30 are improved.

In the step of removing the impurities included in the non-reacted fuel (S104), the impurities are removed by using a filter 56 installed in the fuel inflow pipe 15 during a process of inflow back to the fuel cell stack 30. The impurities may be included in the non-reacted fuel discharged to the fuel inlet 37a. The impurities are filtered by the filter 56 installed in the fuel outflow pipe 43.

Meanwhile, the driving method of the fuel cell system 100 according to this embodiment further includes the steps of injecting the fuel into the fuel inflow pipe 15 and the fuel inlet 37a and discharging the non-reacted fuel to the fuel outlet 37c and the fuel outflow pipe 43. Through these steps, the fuel is supplied in a forward direction. After a reverse operation is continuously performed for a predetermined time, the forward operation is also performed.

When an error occurs in the fuel cell stack 30, the reverse operation is performed. In addition, in order to improve the durability, the reverse operation may be periodically performed for the predetermined time even when the fuel cell stack 30 has no error.

A control unit 60 monitors a voltage of each of an electricity generating units 35. When a voltage of a predetermined electricity generating unit 35 decreases to a reference voltage or less, the control unit 60 can control the supply valve 51 and the discharge valve 53 so as to supply the fuel in the reverse direction.

When the voltage of each electricity generating unit 35 is recovered to a normal voltage by supplying the fuel in the reverse direction, the control unit 60 controls the supply valve 51 and the discharge valve 53 so as to supply the fuel in the forward direction again.

Further, by setting a time for which the fuel is supplied in the forward direction and a time for which the fuel is supplied in the reverse direction to the same value, the forward operation and the reverse operation may be alternately performed.

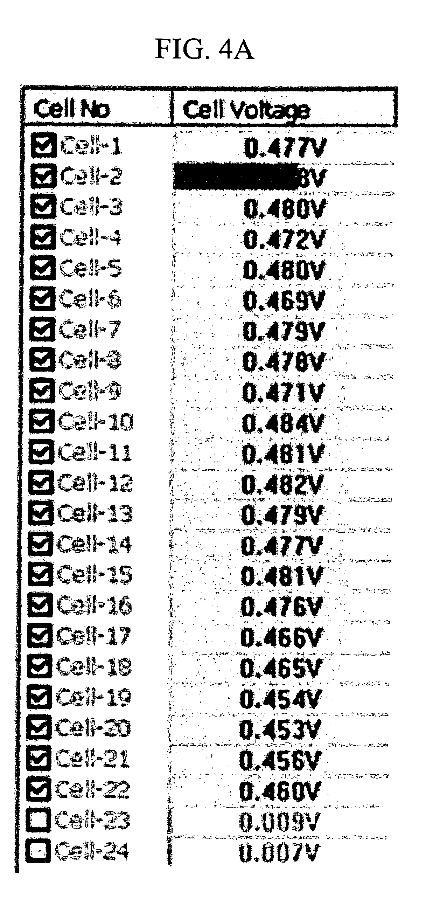

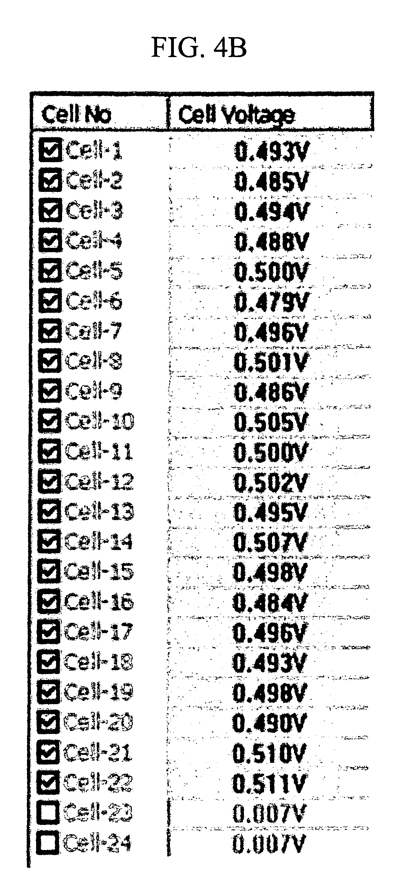

FIG. 4A is a photograph illustrating a voltage of a defective fuel cell stack. FIG. 4B is a photograph illustrating a voltage of a normal fuel cell stack.

Referring to FIGS. 4A and 4B, in this experiment, a direct methanol fuel cell having a current of approximately 1.72A and an output of approximately 17.5W is used.

As shown in FIG. 4A, a second electricity generating unit is defective, such that a voltage decreases to 0.338V. A reason why the voltage decreases is that a fuel passage is blocked, such that the fuel is not normally supplied. In

FIG. 4B, the problem is solved by supplying the fuel in the reverse direction by a driving method of the fuel cell system according to the present invention.

As shown in FIG. 4B, impurities remaining in the fuel passage are removed, such that the voltage of the second electricity generating unit is recovered to 0.485V. As such, when the error occurs in the fuel cell, it is possible to very easily solve the problem without disassembling the fuel cell stack.

While this invention has been described in connection with embodiments thereof, it is to be understood that the invention is not limited to the disclosed embodiments, but, on the contrary, is intended to cover various modifications and equivalent arrangements included within the scope of the appended claims.

## Claims

1. A fuel cell system comprising:
a fuel cell stack provided with a fuel inlet, a fuel outlet, an oxidant inlet and an oxidant outlet;
a fuel supply unit adapted to supply fuel to the fuel cell stack;
an oxidant supply unit adapted to supply oxidant to the fuel cell stack;
a fuel inflow pipe for supplying fuel from the fuel supply unit to the fuel inlet during a first operating condition;
a fuel outflow pipe for discharging non-reacted fuel from the fuel outlet during the first operating condition;
a first bypass pipe for supplying fuel from the fuel supply unit to the fuel outlet during a second operating condition; and
a second bypass pipe for discharging non-reacted fuel from the fuel inlet during the second operating condition.

2. A fuel cell system according to claim 1, wherein the first bypass pipe is connected between the fuel inflow pipe and the fuel outflow pipe.

3. A fuel cell system according to claim 1 or 2, wherein the second bypass pipe is connected between the fuel inflow pipe and the fuel outflow pipe.

4. A fuel cell system according to any preceding claim, comprising a first valve for directing fuel to the fuel inlet during the first operating condition and for directing fuel to the fuel outlet during the second operating condition.

5. A fuel cell system according to any preceding claim, comprising a second valve for directing non-reacted fuel away from the fuel outlet during the first operating condition and for directing non-reacted fuel away from the fuel inlet during the second operating condition.

6. A fuel cell system according to claim 1, wherein a first end of the first bypass pipe is connected to the fuel inflow pipe by a first valve and a second end of the first bypass pipe is connected to the fuel outflow pipe; a first end of the second bypass pipe is connected to the fuel inflow pipe and a second end of the second bypass pipe is connected to the fuel outflow pipe by a second valve; the first valve is adapted to direct fuel to the fuel inlet during the first operating condition and to direct fuel to the first bypass pipe during the second operating condition; and the second valve is adapted to direct non-reacted fuel away from the fuel outlet during the first operating condition and to direct non-reacted fuel away from the second bypass pipe during the second operating condition.

7. A fuel cell system according to claim 6, wherein the first end of the second bypass pipe is connected to the fuel inflow pipe between the first valve and the fuel inlet, and the second end of the first bypass pipe is connected to the fuel outflow pipe between the second valve and the fuel outlet.

8. A fuel cell system according to claim 6 or 7, further comprising a control unit adapted to monitor the operation of the fuel cell stack, determine whether the system should operate in accordance with the first operating condition or the second operating condition, and control at least one of the first and second valves in order to implement the determined said operating condition.

9. A fuel cell system according to one of claims 6 to 8, wherein the first and second valves are three-way valves.

10. A fuel cell system according to any preceding claim, wherein the second operating condition is adapted to rectify a blockage in the fuel cell stack.

11. A fuel cell system according to any preceding claim, comprising a filter that is adapted to remove impurities from non-reacted fuel before the fuel is re-supplied to the fuel cell stack.

12. A driving method for a fuel cell system that includes a fuel cell stack provided with a fuel inlet, a fuel outlet, an oxidant inlet and an oxidant outlet, the said method comprising the steps of:
supplying fuel to the fuel inlet during a first operating condition;
discharging non-reacted fuel from the fuel outlet during the first operating condition;
supplying fuel to the fuel outlet during a second operating condition; and
discharging fuel from the fuel inlet during the second operating condition.

13. A driving method according to claim 12, comprising directing non-reacted fuel via a filter prior to re-supplying it to the fuel cell stack.

14. A driving method according to claim 12 or 13, comprising monitoring the voltage of a plurality of electricity generating units within the fuel cell stack and switching the operation of the fuel cell system from the first operating condition to the second operating condition when the voltage of at least one of the electricity generating units decreases to a reference voltage or less.

15. A driving method according to one of claims 12 or 13, comprising switching the operation of the fuel cell system between the first operating condition and the second operating condition at predetermined intervals.
